# EUROPEAN PATENT APPLICATION

(11) **EP 4 691 905 A1**
(43) Date of publication of application: **11.02.2026**
(21) Application number: 25193608.4
(22) Date of filing: 01.08.2025
(51) Int. Cl.: B64C 1/14, B64D 37/04, B64D 37/30

(54) **FUSELAGE OF AN AIRCRAFT, METHOD FOR CLOSING AN OPENING OF THE FUSELAGE AND AIRCRAFT HAVING SUCH FUSELAGE**

(30) Priority: 07.08.2024 DE 102024122479
(71) Applicant: AIRBUS Operations GmbH, 21129 Hamburg (DE)
(72) Inventor: DIETRICH, Steffen, 21129 Hamburg (DE); LEICHSNER, Florian, 21129 Hamburg (DE); COZZO, Marco, 21129 Hamburg (DE)
(74) Representative: Isarpatent

(57) **Abstract**

The present invention provides a fuselage (101) of an aircraft (100), comprising a front portion (102) and a rear portion (103), with at least one opening (106) provided in the rear portion (103), with the opening (106) being closeable by a structural panel (107) fully removeable from the opening (106), wherein a locking structure (109) for the structural panel (107) is provided in the opening (106) and configured to transfer loads between a primary structure (108) of the fuselage (101) and the structural panel (107), a for closing an opening (106) of a fuselage (101)and an aircraft (100) having such a fuselage (101)..

## Description

The present invention pertains to a fuselage of an aircraft, method for closing an opening of the fuselage and aircraft having such a fuselage.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft.

Hydrogen propelled aircraft are a key technology for zero emission aviation that requires technological adaptations in the systems employed in such aircraft. One of these systems is the energy storage system or tank installed in an aircraft fuselage. Some aircrafts use an articulated hinge or door that allows loading and removal of components like a cylindrical, large cryogenic H2 tank, but use a design principle based on a latching or locking mechanisms in combination with a hinged door. Since these aircraft designs target daily opening and closure of the door and use hinges or latches, relatively heavy components are employed, with hinged doors not being designed for continuous load transfer. Use of the abovementioned designs for planned installation and/or removal of major aircraft components such as tanks or tank structures is thus limited.

Against this background, it is an object of the present invention to find an aircraft fuselage and a method for closing an opening of a fuselage that allows for facilitated access for removing and inserting tanks, in particular LH2 tanks in the aircraft during repair or replacement in operation thereby improving continuous load transfer in the fuselage.

This object is achieved by a fuselage of an aircraft having the features of claim 1, a method for closing an opening of a fuselage having the features of claim 9, and an aircraft comprising such a fuselage having the features of claim 14.

According to a first aspect of the invention, a fuselage of an aircraft is provided, comprising a front portion and a rear portion, with at least one opening provided in the rear portion, with the opening being closeable by a structural panel fully removeable from the opening, wherein a locking structure for the structural panel is provided in the opening and configured to transfer loads between a primary structure of the fuselage and the structural panel. This has the advantage that closing of an opening in a fuselage that allows for insertion or removal of a tank, in particular hydrogen tank in a fuselage in the course of installation or maintenance is enabled that ensures continuous transfer of loads in the fuselage during operation and on ground. Furthermore, the structural panel enables the dismantling of tanks and equipment without damage of primary structure.

A further aspect of the invention lies in a method for closing an opening of a fuselage, in particular a fuselage according to the invention. The method comprises the steps of positioning a structure panel in an opening of the fuselage, aligning lock fittings provided on a circumferential edge of the opening and the structural panel, inserting lock parts into the lock fittings and pulling the structural panel into an assembled position in the fuselage, and securing the lock part to the lock fittings.

This has the advantage that closing an opening, in particular an opening for insertion or removing tanks in an aircraft fuselage can be effected in an efficient manner and without damage to or manipulation of the primary structure of the aircraft while ensuring a complete fit of the structural panel in the opening thus ensuring full load transfer in the primary structures of the fuselage even with big structural openings. To remove the structural panel from the opening, the method is executed in reversed order, which is likewise encompassed by the invention method.

A further aspect of the invention lies in an aircraft having a fuselage of the invention wherein the fuselage front portion is configured as a pressurized cargo or passenger compartment and the fuselage rear portion is configured as an unpressurized compartment housing at least one tank, in particular a pressurized liquid hydrogen (LH2) storage tank, with a pressure bulkhead being arranged between the front portion and the rear portion. This has the advantage that accessibility to tanks is facilitated which leads to reduced manufacturing and maintenance efforts. The fuselage further allows for reduction of empty space inside the fuselage at dedicated locations for installation, deinstallation and maintenance operation of the tank inside the fuselage. As a further advantage downtime for maintenance or replacement of a tank structure in airline operations is reduced as the fuselage structure does not need to be modified due to the removeable and re-insertable structural panel thereby ensuring full load transfer of the rear unpressurized fuselage in operation as on ground. Typical loads in the context of the invention are loads imposed by lateral and vertical gust during manoeuvre as well as ground loads (e. g. during landing and take-off)

Advantageous embodiments and further developments are apparent from the further dependent claims and from the description with reference to the figures.

According to another aspect of the invention, the locking structure comprises a plurality of pairs of lock fittings each pair having a symmetrical configuration, with each pair of lock fittings being attached in corresponding positions of a circumferential edge region of the opening and the structural panel, wherein a lock part is provided, insertable in the lock fittings, to establish a positive-locking connection between the fuselage and the structural panel. It is an advantage of the invention that a structural connection for the integration of a load carrying structural panel into a fuselage of an aircraft can be provided that can be handled with low technical efforts and which can be used to join the fuselage or fuselage primary structure and the structural panel in a safe and efficient way. The lock part further ensures an efficient transfer of shear and bending loads between the structural panel, in particular the skin or shell section at the structural panel and the fuselage as well as the stiffening elements, in particular frames and stringers of the primary structure. The lock part can be released and locked again during operations on ground and is able to compensate for relative misalignment of the structural panel and the fuselage caused by fuselage cut-out serving as the opening and deformation after removal of the structural panel from the airframe or primary structure. Each positive-locking lock part fits into each of the symmetrical parts of the lock fittings attached to the fuselage on the one hand and the structural panel on the other hand.

According to an embodiment of the invention the lock fittings are provided with tapered profiles and the lock part is provided with corresponding tapered edges for insertion into the tapered profiles. This has the advantage that a potential misalignment between the fuselage and the structural panel during joining is compensated since the tapered contact surfaces of the lock part and the lock fittings provide a self-centring. During axial movement of the lock part into the lock fittings while inserting the structural panel in the opening and in the course of closing the opening the two elements will be aligned and rigged back into their nominal position, i. e. the position defined during manufacture of the fuselage. By this realignment into initial position a nearly stress-free overall condition of the fuselage and structural panel is ensured.

According to a further embodiment of the invention means for fastening the lock part to the lock fittings are provided with the means for fastening being configured as one of a locking plate threadable onto the lock fittings and screws projecting through the lock part and screwable into the lock fittings. This has the advantage that by the means for fastening, i.e. a locking plate threaded to the lock fittings or a screw screwed in the lock fittings after projecting through the lock part, the lock part will be pushed into its final locking position and secured. This ensures a safe and precise final positioning and securing of the structural panel in its initial position in the fuselage.

According to a further embodiment of the invention the means for fastening are oriented perpendicular to the fuselage. It is an advantage of this embodiment that the means for fastening are accessible from outside the fuselage and thus allow for fast removal or installation of the structural panel.

According to a further embodiment of the invention each lock fitting is attached adjacent to stiffening elements of the primary structure of the fuselage. This has the advantage that the highest possible stability of the assembly and efficient load transfer in the fuselage is ensured.

According to a further embodiment of the invention the structural panel is provided with reinforcing elements, wherein the reinforcing elements comprise a plurality of vertically extending ribs and at least one beam extending essentially orthogonally with respect to the ribs and wherein each lock fitting is attached adjacent to the reinforcing elements. The advantage of the invention is that an efficient transfer of shear and bending loads between the structural panel and the primary structure of the fuselage is ensured stability of the assembly be increased.

According to a further embodiment of the invention the front portion of the fuselage is configured as a pressurized cargo or passenger compartment and the rear portion of the fuselage is configured as an unpressurized compartment housing at least one tank, in particular a pressurized liquid hydrogen (LH2) storage tank, removeable from the fuselage, and wherein a pressure bulkhead is arranged between the front portion and the rear portion. This has the advantage that the distinct and separated compartments of the fuselage can be provided that allow for an adaptation of the fuselage to the specific aircraft use and related spatial requirements.

According to a further embodiment the method the lock fittings and the lock part are provided with correspondingly tapered contact surface and wherein the structural panel is self-centring in the opening during insertion of the lock part. It is an advantage that fast assembly and disassembly is enabled by a combination of the lock fittings and the lock parts inserted into the lock fittings while the self-centring ability of the combination of lock parts and lock fittings allows for precise and stress-free insertion of the structural panel in the fuselage thus ensuring full integrity of the fuselage outer skin. Positive locking between the lock part and the lock fittings and consequently between the structural panel and the fuselage ensures full load transfer during aircraft operation in a distributed, non-discrete manner and can also compensate for elastic deformation of the fuselage as well as the structural panel in shape that arise due to different loading conditions.

According to a further embodiment the method further comprises securing the lock part to the lock fittings comprises one of positioning a locking plate on the lock fittings and threading the locking plate onto the lock fittings and inserting at least one screw into the lock part and screwing the lock part with the lock fitting. This has the advantage that the lock part will be pushed into its final locking position during tightening the threads or screws and secured. This ensures a safe and precise final positioning of the lock part.

According to a further embodiment the method securing the lock part to the lock fittings comprises completing the positive-locking connection between the fuselage and the structural panel. This has the advantage that the structural panel is secured in its initial position in the fuselage.

According to a further embodiment the method further comprising the step of comprising inserting a tank, in particular a pressurized liquid hydrogen (LH2) storage tank through the opening before inserting the structural panel. This has the advantage that full access to the fuselage for handling the tanks in the fuselage is ensured and efficient, fast and ergonomical manipulation during maintenance or replacement of tanks enabled.

According to a further embodiment of the aircraft, the structural panel is configured to transfer loads of the rear portion. This has the advantage that an efficient transfer of shear and bending loads between the structural panel and the primary structure of the fuselage is ensured and operational stability increased.

The invention will be explained in greater detail with reference to exemplary embodiments depicted in the drawings as appended.
- Fig. 1: schematically depicts a perspective view of an aircraft according to an embodiment of the invention;
- Fig. 2a, b, c: schematically depict views of a section of the fuselage according to an embodiment of the invention;
- Fig. 3: schematically depicts a view of a section of the fuselage according to an embodiment of the invention;
- Fig. 4a, b: schematically depict views of a section of the fuselage structures according to a further embodiment of the invention;
- Fig. 5: schematically depicts a perspective view of an aircraft according to a further embodiment of the invention; and
- Fig. 6: schematically depicts the steps of a method for closing an opening of a fuselage according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

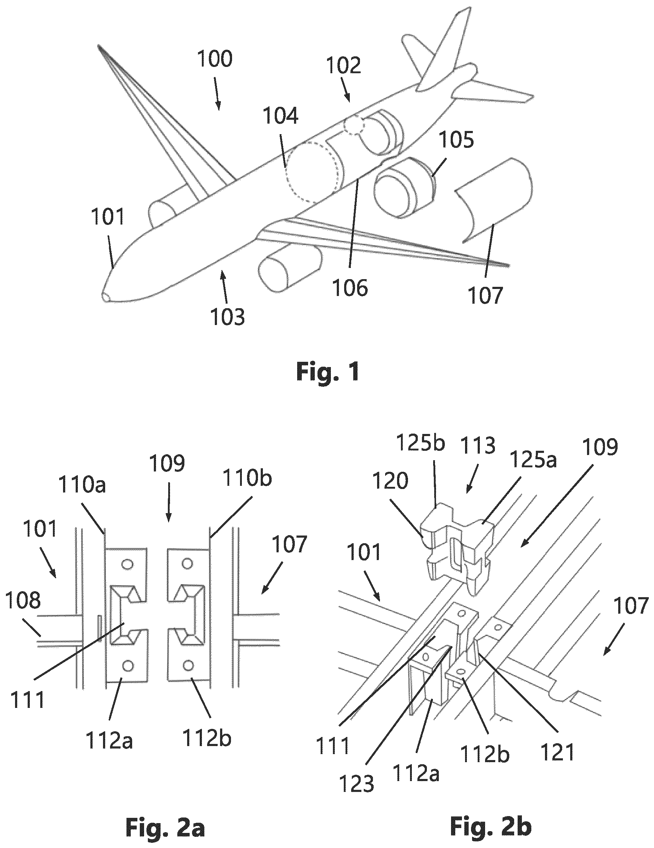

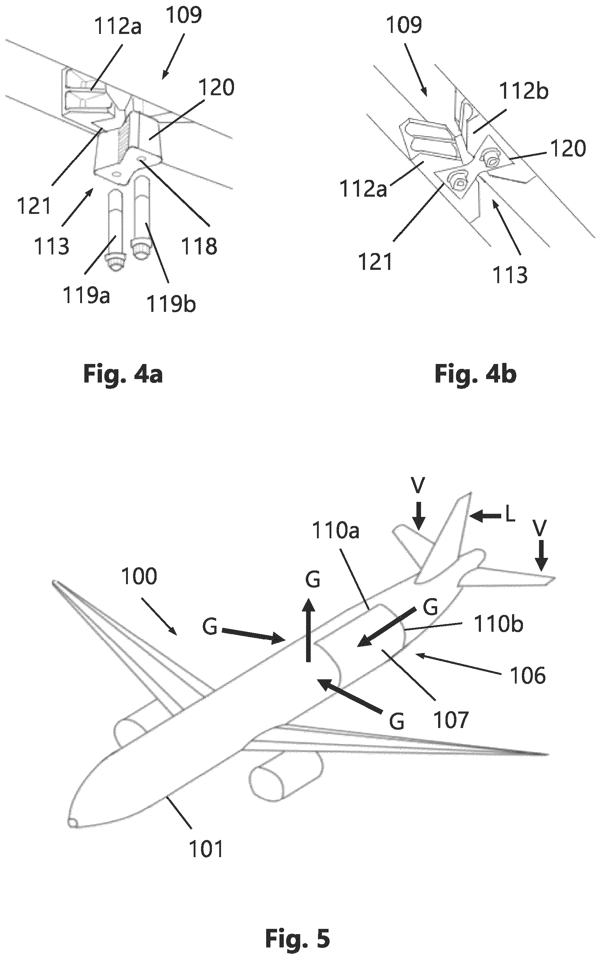

Fig. 1 schematically depicts a perspective view of an aircraft 100 according to an embodiment of the invention. The aircraft 100 comprises a fuselage 101 having a front portion 102 and a rear portion 103 with a bulkhead 104 installed to separate the portions 102, 103. The front portion 102 is configured as a pressurized passenger or cargo compartment whereas the rear portion 103 is configured as an unpressurized storage compartment housing tanks 105, in particular pressurized tanks for cryogenic storage of liquid hydrogen (LH2). The rear portion 103 has a cut-out section in the fuselage 101 forming an opening 106 that can be closed by the structural panel 107 illustrated in Fig. 1 in a removed position with respect to the fuselage 101 and opening 106. Through the opening 106 access is granted to the tanks 105 for maintenance, removal or insertion. The opening 106 is included in the primary structure 108 of the fuselage 101 wherein the structural panel 107 when inserted in the opening 106 closes the opening 106 and is positive-locking connection with the primary structure 108. Due to the locking concept, as presented in embodiments in connection with Figs. 2a to c and Figs. 4a and 4b, the structural panel 107 can be removed and installed repeatedly and for planned and unplanned maintenance without damaging the primary structure 108 and without altering the structure of the fuselage 101.

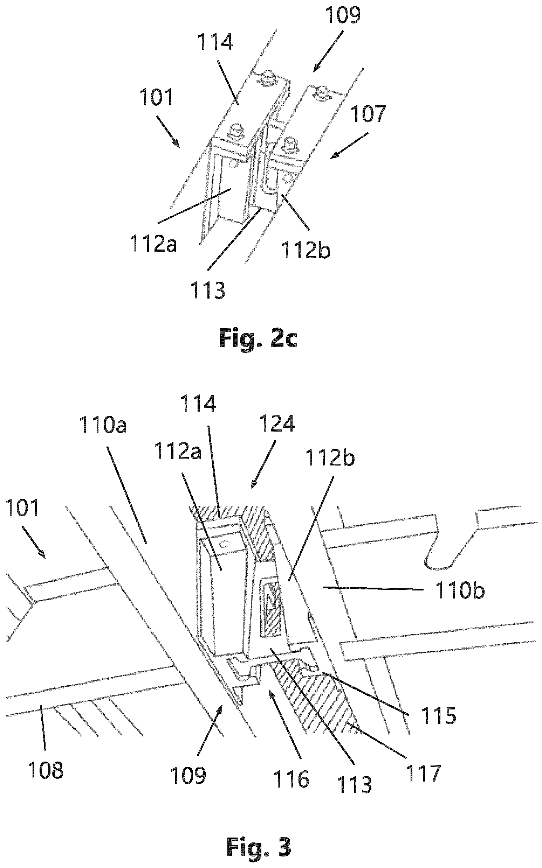

Fig. 2a, b and c schematically depict views of a section of the fuselage 101 according to an embodiment of the invention. Fig. 2a shows an embodiment of one part of the locking structure 109. Fig. 2a shows a pair of lock fittings 112a, b with the two parts of the pair attached in corresponding positions at circumferential edges 110a, b of the opening 106 and the structural panel 107, respectively. Each pair has a symmetrical configuration, with tapered inner profiles 111 extending in an axial direction of the lock fittings112a, b. On the fuselage 101 side, one part of the lock fittings 112a is connected to the primary structure 108, in particular positioned adjacent to frames and stringers. On the side of the structural panel 107, the other part of the lock fittings 112b is positioned adjacent to the elements of a reinforcing structure provided in the plane of the structural panel 107 facing the inner space of the fuselage 101. The opening 106 and structural panel 107 are provided with a plurality of lock fittings 112a, b arranged in equal distribution at the respective circumferential edges 110a, b.

Fig. 2b shows a perspective view of a section of the fuselage 101 and structural panel 107 with the lock fittings 112a, b attached at the respective circumferential edges 110a, b. A lock part 113 is provided, insertable in the lock fittings 112a, b to establish a positive-locking connection between the fuselage 101 and the structural panel 107 via a total of five tapered surfaces 120 provided in every edge part 125a, b of the lock part 113 that contact corresponding inner surfaces 121 of the lock fittings112a, b. The lock part 113 is provide with tapered edge parts 125 a, b each having a geometry comprising the tapered outer surfaces 120 corresponding to the tapered inner surfaces 121 of the profiles 111 of the lock fittings 112a, b.

The edge parts 125a, b are connected via an elongated rib 122 that extends between the edges part 125a, b. After inserting the lock part 113 into the lock fittings 112a, b the rib 122 mates with an elongated slot 123 providing a guiding for the lock part 113 in the lock fittings 112a, b. During axial movement of the lock part 113 into the lock fittings 112a, b the parts to be joined are aligned and rigged back into nominal position (position where it has been manufactured) due to self-centring configuration of the locking structure 109 via the tapered surfaces 120, 121.

Fig. 2c depicts the locking structure 109 in an installed state. A threaded locking plate 114 is covering the lock fittings 112a, b as well as the lock part 113 inserted therein. While threading the locking plate 114 to the lock fittings 112 a, b the lock part 113 is pushed into its final locking position and secured. This also ensures a safe and precise final positioning and securing of the structural panel 107 in its position in the fuselage 101. The lock part 113 ensures an efficient transfer of shear and bending loads between the structural panel 107, in particular the skin or shell section at the structural panel 107 and the fuselage 101 as well as the stiffening elements, in particular frames and stringers of the primary structure 108 (not shown). After removing the locking plate 114 the lock part 113 can be released and locked again during operations on ground and is able to compensate for relative misalignment of the structural panel 107 and the fuselage 101 caused by fuselage cut-out serving as the opening and deformation after removal of the structural panel 107 from the airframe or primary structure 108. Each positive-locking lock part 113 fits into each of the symmetrical profiles 111 of the lock fittings 112a, b described before and attached to the fuselage 101 on the one hand and the structural panel 107 on the other hand.

Fig. 3 shows a bottom view of the locking structure 109 in a fuselage 101. The corresponding parts of the lock fittings112a, b are attached to the primary structure 108 of the fuselage 101 in a peripheral edge 110a of the opening 106 as well as the at the peripheral edge 110b of structural panel 107 facing each other. A lock part 113 is inserted into the lock fittings112a, b. The parts of lock fittings112a, b each have protrusions 115 at the lower end 116 on which the lock part 113 is supported. The lock part 113 is secured in the lock fittings112a, b by means of a locking plate 114, threaded to the lock fittings112a, b. A gap 124 between the fuselage 101 and the structural panel 107 is covered by a fairing 117, which does not contribute to load transfer but ensures aerodynamics of the fuselage 101. By using the locking structure 109 a potential misalignment between the fuselage 101 and the structural panel 107 during joining is compensated since the contact surfaces 120, 121 of the lock part 113 and the lock fittings112a, a are tapered and provide a self-centring. During axial movement of the lock part 113 into the lock fittings 112a, b while inserting the structural panel 107 in the opening 106 and in the course of closing the opening 106 the two elements are aligned and rigged back into their nominal position, i. e. the position defined during manufacture of the fuselage 101. By this realignment into initial position a nearly stress-free overall condition of the fuselage 101 and structural panel 107 is ensured.

Figs. 4a and 4b schematically depict views of a section of the fuselage 101 according to a further embodiment of the invention. Also in this embodiment lock fittings 112a, b are provided attached to the fuselage 101 and the structural panel 107, wherein the lock fittings 112a, b have a structure comparable to the structure of the lock fittings 112a, b describe in connection with Figs 3a to 3c but with only three inner surfaces 121 contacting three correspondingly inverted outer surfaces 120 of the lock part 113. In contrast to the embodiment shown in Figs. 3a to 3c, the lock part 113 is provided with two holes 118 into which the screws 119a, b shown in Fig. 4a are inserted. The screws 119a, b are used to screw the lock part 113 to lock fittings112a, b, thereby achieving the centring and securing effect in the locking structure 109. The embodiment shown in Figs. 4a and 4b can therefore be used without a locking plate 114. Fig. 4a shows the locking structure 109 before assembly, while Fig. 4b shows the same structure in the assembled state. The advantageous effects of the invention fuselage 101 as describe before with respect to locking and centring are likewise achieved by this embodiment.

Fig. 5 schematically depicts a perspective view of an aircraft 100 according to a further embodiment of the invention. The aircraft 100 is shown with a structural panel 107 closing an opening 106 in the fuselage 101. The removeable and re-insertable structural panel 107 thereby ensures full load transfer of the rear unpressurized fuselage in operation as on ground. Typical loads in the context of the invention are loads imposed by lateral and vertical gust as indicated by arrows L and V during manoeuvre as well as ground loads applied during landing and take-off and indicated by arrows G. The structural panel 107 used in the fuselage 101 of the aircraft 100 is configured to transfer loads within the fuselage due to positive locking of the structural panel 107 and the fuselage 101 established via the locking structures 109 provided in the peripheral edges 110a, b and described above.

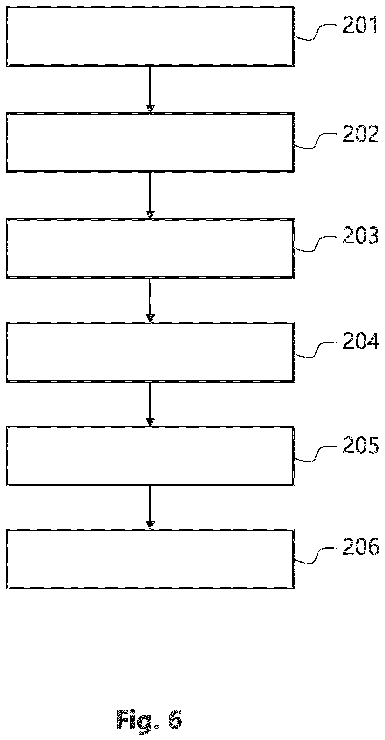

Fig. 6 schematically depicts the steps of a method according to an embodiment of the invention for closing an opening in a fuselage 101, in particular a fuselage 101 according to the invention. In a first step 201a structure panel 107 is positioned in an opening 106 of the fuselage 101, e.g. supported by ground equipment. During insertion the a plurality of lock fittings 112a, b provided on circumferential edges 110a, b of the opening 106 and the structural panel 107 are aligned in a further step 202. Thereafter lock parts 113 are inserted into the lock fittings 112a, b to ensure a pre-positioning of the structure panel 107 in the opening in step 203. During axial movement of the lock part 113 into the lock fittings 112a, b the fuselage 101 and the structural panel 107 to be joined are be aligned in the opening and rigged back into nominal position i. e. the position where it has been manufactured in step 204. By this realignment into initial position a nearly stress-free overall condition is ensured. In a further step 205 the lock part 113 is secured to the lock fittings 112a, b either by screws 119 extending through the lock part 113 and screwed in the bottom of the lock fittings 112a, b or by a locking plate 114 threaded to the lock fittings 112a, b. The lock fittings 112a, b and the lock part 113 provided with correspondingly tapered contact inner and outer surfaces 120, 121 are self-centring and thus centre the structural panel 107 in the opening during insertion. During securing the lock part 113 to the lock fittings 112a, b the positive-locking connection between the fuselage 101 and the structural panel 107 is completed since the lock parts 113 are forced into their final position in the lock fittings 112a, b by threading. In a further step 206 a fairing 117 is attached to close a gap 124 between the structural panel 107 and the fuselage 101 to ensure optimal aerodynamics of the fuselage 101. To remove the structural panel 107 from the opening 106, the method is executed in revered order.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: aircraft
- 101: fuselage
- 102: front portion
- 103: rear portion
- 104: bulkhead
- 105: tank
- 106: opening
- 107: structural panel
- 108: primary structure
- 109: locking structure
- 110a, b: edge
- 111: profile
- 112a, b: lock fitting
- 113: lock part
- 114: locking plate
- 115: protrusion
- 116: end
- 117: fairing
- 118: hole
- 119: screw
- 120: outer surface
- 121: inner surface
- 122: rib
- 123: slot
- 124: gap
- 125a, b: edge part
- 202: step
- 203: step
- 204: step
- 205: step
- 206: step
- L, G, V: arrows

## Claims

1. Fuselage (101) of an aircraft (100), comprising a front portion (102) and a rear portion (103), with at least one opening (106) provided in the rear portion (103), with the opening (106) being closeable by a structural panel (107) fully removeable from the opening (106), wherein a locking structure (109) for the structural panel (107) is provided in the opening (106) and configured to transfer loads between a primary structure (108) of the fuselage (101) and the structural panel (107).

2. Fuselage (101) according to claim 1, wherein the locking structure (109) comprises a plurality of pairs of lock fittings (112a, b) each pair having a symmetrical configuration, with each pair of lock fittings (112a, b) being attached in corresponding positions of a circumferential edge (110a, b) of the opening (106) and the structural panel (107), wherein a lock part (113) is provided, insertable in the lock fittings (112a, b), to establish a positive-locking connection between the fuselage (101) and the structural panel (107).

3. Fuselage (101) according to claim 2, wherein the lock fittings (112a, b) are provided with profiles (111) having tapered inner surfaces (121) and the lock part (113) is provided with corresponding tapered outer surfaces (121) for insertion into the profiles (111).

4. Fuselage (101) according to claim 2 or 3, wherein means for fastening the lock part (113) to the lock fittings (112a, b) are provided with the means for fastening being configured as one of a locking plate (114) threadable onto the lock fittings (112a, b) and screws (119) projecting through the lock part (113) and screwable into the lock fittings (112a, b).

5. Fuselage (101) according to claim 4, wherein the means for fastening are oriented perpendicular to the fuselage (101).

6. Fuselage (101) according to any one of claims 1 to 5, wherein each lock fitting (112a, b) is attached adjacent to stiffening elements of the primary structure (108) of the fuselage (101).

7. Fuselage (101) according to any one of claims 1 to 6, wherein the structural panel (107) is provided with reinforcing elements, wherein the reinforcing elements comprise a plurality of vertically extending ribs and at least one beam extending essentially orthogonally with respect to the ribs and wherein each lock fitting (112a, b) is attached adjacent to the reinforcing elements.

8. Fuselage (101) according to any one of claims 1 to 7, wherein the front portion (102) is configured as a pressurized cargo or passenger compartment and the rear portion (103) is configured as an unpressurized compartment, housing at least one tank (105), in particular a pressurized liquid hydrogen (LH2) storage tank, removeable from the fuselage (101), with a pressure bulkhead (104) being arranged between the front portion (102) and the rear portion (103).

9. Method for closing an opening (106) of a fuselage (101), in particular a fuselage (101) according to any one of claims 1 to 8, comprising the steps of: positioning a structure panel (107) in an opening (106) of the fuselage (101), aligning the lock fittings (112a, b) provided on circumferential edges (110a, b) of the opening (106) and the structural panel (107), inserting lock parts (113) into the lock fittings (112a, b), pulling the structural panel (107) into an assembled position in the fuselage (101), and securing the lock part (113) to the lock fittings (112a, b).

10. Method according to claim 9, wherein the lock fittings (112a, b) and the lock part (113) are provided with correspondingly tapered contact surfaces (120, 121) and wherein the structural panel (107) is self-centring in the opening (106) during insertion of the lock part (113).

11. Method according to claim 9 or 10, wherein securing the lock part (113) to the lock fittings (112a, b) comprises one of positioning a locking plate (114) on the lock fittings (112a, b) and threading the locking plate (114) onto the lock fittings (112a, b) and inserting at least one screw (119) into the lock part (113) and screwing the lock part (113) with the lock fittings (112a, b).

12. Method according to claim 11, wherein securing the lock part (113) to the lock fittings (112a, b) comprises completing the positive-locking connection between the fuselage (101) and the structural panel (107).

13. Method according to any one of claims 9 to 12, further comprising inserting a tank (105), in particular a pressurized liquid hydrogen (LH2) storage tank through the opening (106) before inserting the structural panel (107).

14. Aircraft (100) having a fuselage (101) according to any one of claims 1 to 8, wherein the fuselage (101) front portion (102) is configured as a pressurized cargo or passenger compartment and the fuselage (101) rear portion (103) is configured as an unpressurized compartment housing at least one tank (105), in particular a pressurized liquid hydrogen (LH2) storage tank, with a pressure bulkhead (104) being arranged between the front portion (102) and the rear portion (103).

15. Aircraft (100) according to claim 14, wherein the structural panel (107) is configured to transfer loads of the rear portion (103).
